# EUROPEAN PATENT SPECIFICATION

(11) **EP 2 807 400 B1**
(45) Date of publication and mention of the grant of the patent: **23.03.2016**
(21) Application number: 12780161.1
(22) Date of filing: 24.10.2012
(51) Int. Cl.: F16G 11/02, F16G 11/08, F16G 11/00

(54) **CHINESE FINGER WITH FLAT OR FLATTENED FILAMENTS**
SEILSTRUMPF MIT FLACHEN ODER ABGEFLACHTEN FASERN
DOIGTIER JAPONAIS AVEC FILAMENTS PLATS OU APLATIS

(30) Priority: 26.01.2012 EP 12152652
(43) Date of publication of application: 03.12.2014
(73) Proprietor: NV Bekaert SA, 8550 Zwevegem (BE)
(72) Inventor: ONISHCHENKO, Sergey, Lipetsk Region 398908 (RU); DESPIEGELAERE, Roel, B-8510 Marke (BE)
(74) Representative: Messely, Marc
(86) International application number: PCT/EP2012/071025
(87) International publication number: WO 2013/110360

(56) References cited:
- GB-A- 159 762
- US-A- 3 287 778
- US-A- 4 321 854

## Description

### Technical Field

The invention relates to a tubular fabric for connecting two steel cords at two connecting ends and an assembly of two steel cords and a tubular fabric for connecting the steel cords at two connecting ends.

### Background Art

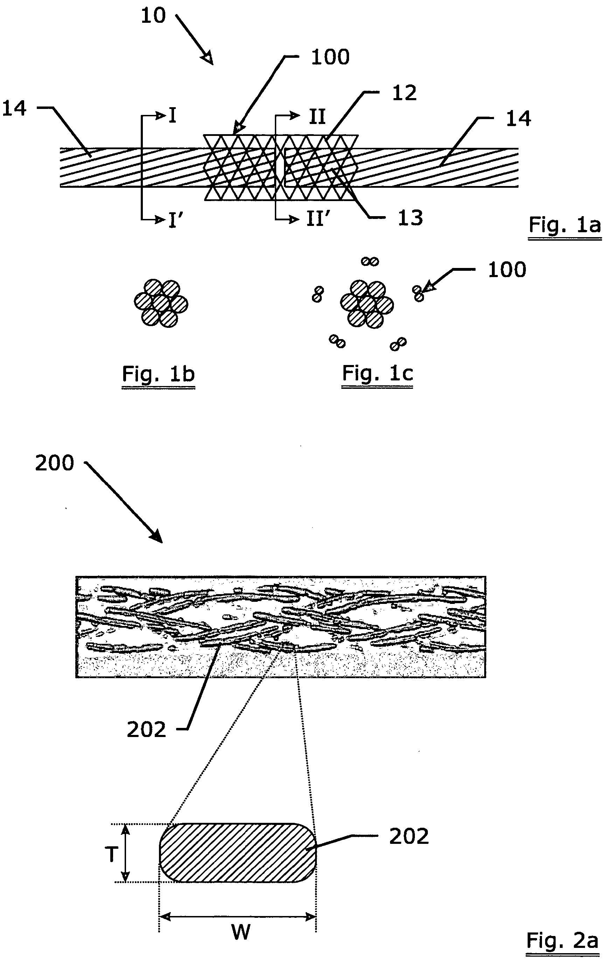

A tubular fabric hitherto known for connecting two steel cords in the art is sometimes referred to as a "Chinese finger". This prior art tubular fabric 10 for connecting two steel cords is shown in Figure 1. It is composed of metal threads or wires 12 helically interwoven or braided to form a cylindrical braiding. Between adjacent successive threads 12 in the axial direction and in the peripheral direction, are spaces 13. The resulting network of lozenges is very flexible and facilitates radial expansion and contraction of the tubular fabric when it is positioned on the ends of two steel cords and contraction and gripping of those ends when the joined cords are subjected to forces tending to pull the cords from one another. The general purpose is to use such a tubular fabric or Chinese finger to connect two steel cords each time there is a fracture during twisting.

The contact stresses in between the filaments of the tubular fabric and the exterior filaments of the cords to be connected are to a large extent line or point contacts. Because of these line or point contacts fretting may occur between the filaments of the tubular fabric and the steel cords. This may cause again a fracture and reduced fatigue performance.

Besides, an assembly of two steel cords connected by hitherto known tubular fabrics has a quite visible disadvantage that the radial diameter increases dramatically over the length of the tubular fabric. In case it is desirable to have continuous cords available by such assemblies, this diameter increase might have difficulties in the subsequent operations of such cords, e.g. guiding the cords through a steelastic installation when rubberising of such cords. Thus, it is quite necessary to find an effective way to decrease or at least limit the increase of the radial diameter over the length of the tubular fabric in order to obtain uniform continuous reinforcing elements.

US-A-4,321,854 discloses a composite fishing line comprising a core and a braided jacket. The jacket functions as a Chinese finger upon fracture of the core.

Another example is disclosed in GB 159762.

### Disclosure of Invention

The primary object of the invention is to mitigate drawbacks of the prior art.

The further object of the invention is to decrease the diameter over the length of the tubular fabric.

Another object of the invention is to increase tensile strength at level of fracture, or at least to reduce the risk for fretting and fractures.

According a first aspect of the invention, there is provided a tubular fabric adapted for connecting two steel cords at two connecting ends; the tubular fabric comprises a plurality of steel filaments, one or more of which has/have an elongated cross-section.

Preferably, each of the steel filaments has a substantially flat cross-section.

Preferably, each of the steel filaments has a substantially oval cross-section.

Preferably, each of the steel filaments has a substantially rectangular cross-section.

The steel filaments with the above three cross-sections constituting the tubular fabric according to the invention may easily reduce the contact stresses in between the tubular fabric and the exterior steel filaments of the cords to be connected by changing from point resp. line contacts to line resp. surface contacts so that the risk for fretting is considerably reduced since the contact pressures are distributed over an increase area of contact.

Preferably, the elongated cross-section has a ratio of a width W to the thickness T at least 1.05.

More preferably, the ratio of a width W to the thickness T is between 1.1 and 5.5, e.g. 1.2 to 2.0 or 2.5 to 4.0. A minimum ratio is necessary to make sure that the steel filaments constituting the tubular fabric have elongated cross-sections according to the invention. The maximum ratio is determined by stability considerations.

Preferably, the number of the steel filaments constituting the tubular fabric ranges from 4 up to 128; more preferably, ranges from 8 to 32.

A tubular fabric according to the invention, each of the steel filaments constituting the tubular fabric with a substantially flat or substantially rectangular cross-section is obtainable by a process of rolling a round wire into a flat wire or a rectangular wire.

According a second aspect of this invention, an assembly of two steel cords and a tubular fabric for connecting the steel cords at two connecting ends is provided. The joint part of the tubular fabric and the two connecting ends will not only have a limited increase of the radial diameter but also a strong connection because of the elongated cross-sections of the steel filaments. The two connecting ends of the cords may further have a decreased diameter as the core or at least one layer or the wrapping filament at the two connecting ends of the steel cords could be absent. This would further avoid an increase in diameter when the tubular fabric is put over both steel cord ends.

The assembly of the invention, preferably, the two ends of the tubular fabric are soldered to the exterior filaments of the steel cords in order to obtain a sufficiently high breaking strength of the joint part and allow proper tensioning of the assembly. A solder has proven to provide a stronger bonding than an adhesive resin. Moreover, a solder is to be preferred above a weld, since welding may make the assembly too brittle.

### Brief Description of Figures in the Drawings

Figure 1 a is an axial section of a known assembly of two steel cords connecting by a known connector tubular fabric according to the prior art.
   Figure 1b is a cross-section according to plane I-I in Figure 1 a.
   Figure 1c is a cross-section according to plane II-II in Figure 1 a.
Figure 2a and 2b and 2c respectively shows axial sections of three different embodiments of the invention.
Figure 3a shows an axial section of a fourth preferred embodiment of the invention.
   Figure 3b is a cross-section according to plane I-I' in Figure 3a.
   Figure 3c is a cross-section according to plane II-II' in Figure 3b.
   Figure 3d is a cross-section of the individual filaments of thelubularfabric.

### Mode(s) for Carrying Out the Invention

Fractures of a steel cord may happen during the twisting process. However, it is desirable to have continuous cords with long lengths available so as to obtain uniform continuous reinforcing elements. Having long lengths of equal diameter avoids difficulties during the rubberising of the cords. Especially for the joint part, which is the part where two steel cords are joined together, it is desirable to have a strong connection as well as an equal diameter or a minimized change in diameter.

The known assembly shown in Figure 1 is composed of two steel cords 14 connected by a known connector tubular fabric 10. The diameter (a radial thickness) of the assembly over the length of the tubular fabric is equal to the sum of diameter of the steel cord itself and the radial thickness of the tubular fabric. So there is a substantial increase in diameter. Besides, as the filaments constituting the tubular fabric have round cross-sections, the contact stresses in between the tubular fabric and steel cords to be connected are point or line contacts, which will result in an increased fretting and increased chance for fractures.

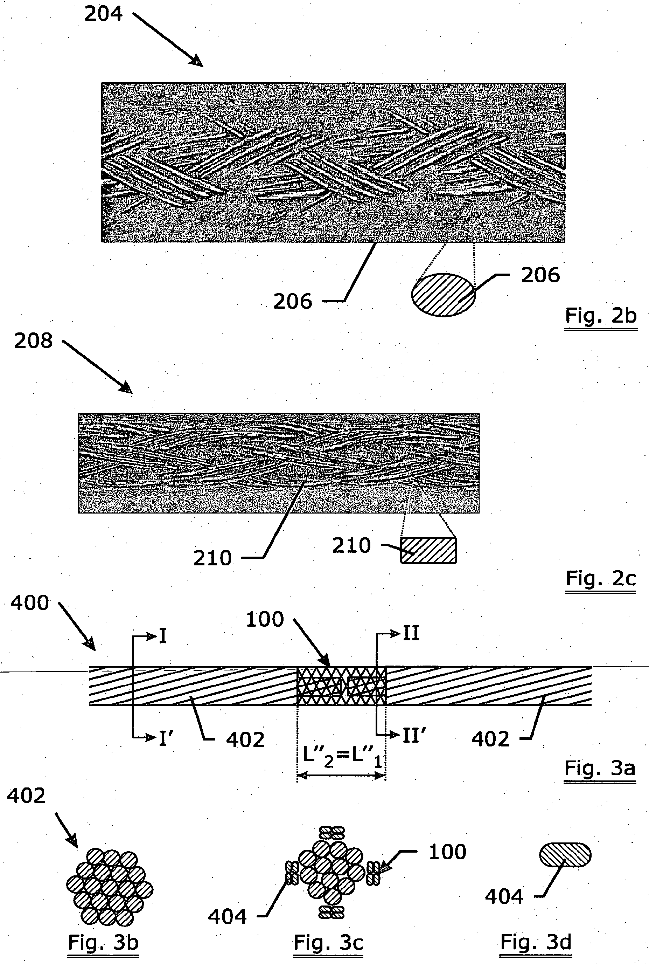

According to the invention, a lot of tubular fabrics may be provided with one or more filaments having an elongated cross-section. As a matter of example, three different embodiments of the connector tubular fabric or the Chinese finger are given here: one with sixteen filaments with a flat cross-section illustrated as the tubular fabric 200 in Figure 2a and one with thirty-two filaments with an oval cross-section illustrated as the tubular fabric 204 in Figure 2b and the third one with eight filaments with a rectangular cross-section illustrated as the tubular fabric 208 in Figure 2c., Within the context of the present invention, the terms 'flat cross-section' refer to a cross-section with two flat sides, which are substantially parallel to each other.
Still within the context of the present invention, the term "rectangular cross-section" refer to a cross-section with four flat sides, two pairs of substantially parallel sides.
The tensile strength of the filaments of the three Chinese fingers is ranging from normal tensile strength up to super tensile strength, preferred to ultra tensile strength. A normal tensile strength has values ranging from 2400 MPa to 3200 MPa. A super tensile strength has values ranging from 3200 MPa to 3800 MPa. An ultra-tensile strength has values ranging from 3800 MPa to 4500 MPa.

A first preferred embodiment 200 is according to the invention and shown in Figure 2a is similar to the tubular fabric 100 as shown in Figure 1 except that all the filaments 202 constituting the tubular fabric 100 have flat cross-sections. The tubular fabric according to the invention was built as follows:

Starting product is a steel wire rod, this steel wire rod has following steel composition: A minimum carbon content of 0.65%, a manganese content ranging from 0.40% to 0.70%, a silicon content ranging from 0.15% to 0.30%, a maximum sulphur content of 0.03%, a maximum phosphorus content of 0.30%, all percentages being percentages by weight. A typical steel tire cord composition for high-tensile steel cord has a minimum carbon content of around 0.80 weight %, e.g. 0.78 - 0.82 weight %. The steel rod is drawn in a number of consecutive steps until the required final diameter. The drawing steps may be interrupted by one or more heat treatment steps such as patenting.

The steel filaments are preferably provided with a coating which promotes the adhesion to rubber or with a coating which gives corrosion resistance to the wire. A rubber adherable coating is e.g. brass; a corrosion resistant coating is e.g. zinc.

As a matter of example only, the manufacture of the flat filaments 202 starts with a round filament with a diameter of 0.38 mm, and further flattened by means of one or more pairs of rolls with final dimensions of a width of 0.430 mm and thickness of 0.340 mm. The ratio of a width W to the thickness T here is 1.265.

After that, sixteen flattened steel filaments 202 as manufactured are helically interwoven or braided to form the cylindrical braiding or tubular fabric. The exterior characters of the tubular fabric are identical to the known connector tubular fabric 100.

A second embodiment 204 of the invention is illustrated in Figure 2b. Here the tubular fabric or Chinese finger is constituted by filaments 206 with an oval or elliptic cross-section. Filaments 206 with an oval cross-section may be made my drawing them through profile drawing dies.

A third embodiment 208 of the invention is illustrated in Figure 2c. Here the tubular fabric or Chinese finger is constituted by filaments 210 with a rectangular section. Filaments 210 with rectangular cross-sections may be made by rolling them by means of so-called Turk's heads.

A fourth preferred embodiment according to the invention and shown in Figure 3a is an assembly 400 of two steel cords 402 with a tubular fabric 100 as shown in Figure 2a for connecting the steel cords at two connecting ends.
Figure 3b is a cross-section according to plane I-I' in Figure 3a showing the steel cords 402.
Figure 3c is a cross-section according to plane II-II' in Figure 3b showing the steel cords 402 with removed outer layer and the tubular fabric 100.
Figure 3d is a cross-section of the individual filaments 404 of the tubular fabric 100.

At the two connecting ends of the steel cords 402 the fifteen filaments of the outer layer are absent over a total length L₂". The tubular fabric 100 with a particular length L₁" is positioned and just overlaps with the total length L₂". The result is that the diameter of the assembly over the length L2" decreases significantly" because of the flat cross sections of the steel filaments constuting the tubular fabric 100 together with the absent of the outer layer filaments absent of the cords to be connected.

Removal of the outer layer filaments at the two connecting ends of the two steel cords is also done manually and with appropriate cutting means, e.g. by means of a pair of pliers. Then the remaining filaments at the two connecting ends of the steel cord - the three core filaments and the inner layer nine filaments - are heated and over twisted in order to obtain a thinner radial diameter of the ends further to contribute to the diameter decreasing of the assembly over the length L₂".

Further, in order to avoid the filaments (the fifteen outer layer filaments) at the cutting point becoming loose, they are connected to the rest of the steel cord by means of solder.

After that, the two ends of tubular fabric 100 are soldered to the exterior filaments of the steel cords in order to increase tensile strength at level of fracture. If the two ends of tubular fabric are not soldered to the exterior filaments of the steel cords, the connection of the two ends of the steel cords is bad, which will cause too big a loss of tensile strength at level of fracture.

It is to be understood that the invention is not limited to the tubular fabrics and the assembly of the embodiments above, but that it may also be applied to tubular fabrics constituted by steel filaments with elongated cross-sections and assemblies comprising such tubular fabrics for connecting two ends of a steel cord or steel cords.

## Claims

1. A tubular fabric (100, 200, 204, 208) adapted for connecting two steel cords at two connecting ends (402), said tubular fabric (100) comprising a plurality of steel filaments, wherein one or more of said steel filaments (202, 206, 210) has/have an elongated cross-section **characterized in that** said elongated cross-section has a ratio of a width W to the thickness T of at least 1.05.

2. A tubular fabric (200) according to Claim 1, wherein each of said steel filaments (202) has a substantially flat cross-section.

3. A tubular fabric (204) according to Claim 1, wherein each of said steel filaments (206) has a substantially oval cross-section.

4. A tubular fabric (208) according to Claim 1, wherein each of said steel filaments (210) has a substantially rectangular cross-section.

5. A tubular fabric (100, 200, 204, 208) according to any one of Claim 1 to 4, wherein the number of the steel filaments (202, 206, 210) constituting the tubular fabric ranges from 4 up to 128.

6. A tubular fabric (100, 200, 204, 208) according to Claim 5, wherein the number of the steel filaments (202, 206, 210) constituting the tubular fabric ranges from 8 up to 32.

7. A tubular fabric (100, 200, 204, 208) according to Claim 1, wherein said ratio of a width W to the thickness T is between 1.1 and 5.5.

8. A tubular fabric (100, 200, 204, 208) according to Claim 2 or 4, wherein said steel filaments are obtainable by a process of rolling round wires into flat wires or rectangular wires.

9. An assembly of two steel cords (402) and a tubular fabric (100, 200, 204, 208) as claimed in any preceding claim for connecting said steel cords (402) at two connecting ends.

## Patentansprüche

1. Röhrenförmiges Gewebe (100, 200, 204, 208), das geeignet ist, zwei Stahlseile an zwei Verbindungsenden (402) zu verbinden, wobei das röhrenförmige Gewebe (100) eine Vielzahl von Stahlfilamenten umfasst, wobei eines oder mehrere der Stahlfilamente (202, 206, 210) einen länglichen Querschnitt hat/haben, **dadurch gekennzeichnet, dass** der längliche Querschnitt ein Verhältnis einer Breite W zu der Dicke T von mindestens 1,05 hat.

2. Röhrenförmiges Gewebe (200) nach Anspruch 1, wobei jedes der Stahlfilamente (202) einen im Wesentlichen flachen Querschnitt hat.

3. Röhrenförmiges Gewebe (204) nach Anspruch 1, wobei jedes der Stahlfilamente (206) einen im Wesentlichen ovalen Querschnitt hat.

4. Röhrenförmiges Gewebe (208) nach Anspruch 1, wobei jedes der Stahlfilamente (210) einen im Wesentlichen rechteckigen Querschnitt hat.

5. Röhrenförmiges Gewebe (100, 200, 204, 208) nach einem der Ansprüche 1 bis 4, wobei die Anzahl der Stahlfilamente (202, 206, 210), aus denen das röhrenförmige Gewebe besteht, von 4 bis 128 beträgt.

6. Röhrenförmiges Gewebe (100, 200, 204, 208) nach Anspruch 5, wobei die Anzahl der Stahlfilamente (202, 206, 210), aus denen das röhrenförmige Gewebe besteht, von 8 bis 32 beträgt.

7. Röhrenförmiges Gewebe (100, 200, 209, 208) nach Anspruch 1, wobei das Verhältnis einer Breite W zu der Dicke T zwischen 1,1 und 5,5 beträgt.

8. Röhrenförmiges Gewebe (100, 200, 204, 208) nach Anspruch 2 oder 4, wobei die Stahlfilamente durch ein Verfahren des Walzens von runden Drähten zu flachen Drähten oder rechteckigen Drähten erhältlich sind.

9. Anordnung aus zwei Stahlseilen (402) und einem röhrenförmigen Gewebe (100, 200, 204, 208) nach einem der vorhergehenden Ansprüche zum Verbinden der Stahlseile (402) an zwei Verbindungsenden.

## Revendications

1. Toile tubulaire (100, 200, 204, 208) conçue pour raccorder deux câbles d'acier au niveau de deux extrémités de raccordement (402), ladite toile tubulaire (100) comprenant une pluralité de filaments d'acier, un ou plusieurs desdits filaments d'acier (202, 206, 210) présentant une section transversale allongée, **caractérisée en ce que** ladite section transversale allongée présente un rapport d'une largeur W à l'épaisseur T d'au moins 1,05.

2. Toile tubulaire (200) selon la revendication 1, dans laquelle chacun desdits filaments d'acier (202) présente une section transversale essentiellement plate.

3. Toile tubulaire (204) selon la revendication 1, dans laquelle chacun desdits filaments d'acier (206) présente une section transversale essentiellement ovale.

4. Toile tubulaire (208) selon la revendication 1, dans laquelle chacun desdits filaments d'acier (210) présente une section transversale essentiellement rectangulaire.

5. Toile tubulaire (100, 200, 204, 208) selon l'une quelconque des revendications 1 à 4, dans laquelle le nombre des filaments d'acier (202, 206, 210) constituant la toile tubulaire va de 4 à 128.

6. Toile tubulaire (100, 200, 204, 208) selon la revendication 5, dans laquelle le nombre des filaments d'acier (202, 206, 210) constituant la toile tubulaire va de 8 à 32.

7. Toile tubulaire (100, 200, 204, 208) selon la revendication 1, dans laquelle ledit rapport d'une largeur W à l'épaisseur T est compris entre 1,1 et 5, 5.

8. Toile tubulaire (100, 200, 204, 208) selon la revendication 2 ou 4, dans laquelle lesdits filaments d'acier peuvent être obtenus par un procédé de laminage de fils ronds en fils plats ou en fils rectangulaires.

9. Assemblage de deux câbles d'acier (402) et d'une toile tubulaire (100, 200, 204, 208) selon l'une quelconque des revendications précédentes servant à raccorder lesdits câbles d'acier (402) au niveau de deux extrémités de raccordement.
